# EUROPÄISCHE PATENTSCHRIFT

(11) **EP 3 015 702 B1**
(45) Veröffentlichungstag und Bekanntmachung des Hinweises auf die Patenterteilung: **10.01.2018**
(21) Anmeldenummer: 15191152.6
(22) Anmeldetag: 23.10.2015
(51) Int. Cl.: F03D 1/06, B29C 65/00, B29D 99/00

(54) **ROTORBLATT FÜR EINE WINDKRAFTANLAGE UND VERFAHREN ZUM HERSTELLEN EINES ROTORBLATTS**
ROTOR BLADE FOR A WIND TURBINE AND METHOD FOR PRODUCING A ROTOR BLADE
PALE DE ROTOR POUR UNE EOLIENNE ET PROCEDE DE FABRICATION D'UNE PALE DE ROTOR

(30) Priorität: 28.10.2014 DE 102014221965
(43) Veröffentlichungstag der Anmeldung: 04.05.2016
(73) Patentinhaber: Senvion GmbH, 22297 Hamburg (DE)
(72) Erfinder: EYB, Enno, 24116 Kiel (DE); ZELLER, Lenz Simon, 24242 Felde (DE)
(74) Vertreter: Seemann & Partner Patentanwälte mbB

(56) Entgegenhaltungen:
- WO-A1-2010/117262
- WO-A1-2014/079456
- DE-A1-102008 055 479
- US-A1- 2010 132 884

## Beschreibung

Die Erfindung betrifft ein Rotorblatt für eine Windkraftanlage, umfassend eine Saugseitenschale und eine Druckseitenschale, die aus einem Faserverbundwerkstoff hergestellt sind, wobei ein vorderer Rand der Saugseitenschale und ein vorderer Rand der Druckseitenschale an einer Profilvorderseite des Rotorblatts miteinander verbunden sind. Ferner betrifft die Erfindung ein Verfahren zum Herstellen eines Rotorblatts für eine Windkraftanlage, wobei das Rotorblatt eine Saugseitenschale und eine Druckseitenschale umfasst, die aus einem Faserverbundwerkstoff hergestellt sind und wobei ein vorderer Rand der Saugseitenschale und ein vorderer Rand der Druckseitenschale an einer Profilvorderseite des Rotorblatts miteinander verbunden sind.

Rotorblätter für Windkraftanlagen werden heutzutage vielfach in Schalenbauweise gefertigt. Die Schalenteile werden in Formen hergestellt, nach dem Aushärten in ihren Formen zusammengesetzt und miteinander verbunden. Ein solches Rotorblatt besteht üblicherweise aus einer Saugseitenschale und einer Druckseitenschale. Die Saugseite des Rotorblattprofils wird durch die Außenseite der Saugseitenschale und die Druckseite des Rotorblattprofils durch die Außenseite der Druckseitenschale gebildet. Die Rotorblattschalen werden vielfach aus faserverstärkten Kunststoffen hergestellt, beispielsweise aus glas- oder kohlefaserverstärkten Polyester- oder Epoxidharzen. Zur Herstellung des Faserverbundwerkstoffs werden Fasergelege oder Fasermatten in die Form der Rotorblattschale eingelegt und anschließend in einem Harzinfusionsverfahren vergossen. Bei diesem Vorgang wird das zähflüssige Kunstharz unter Unterdruck in die trockenen Fasergelege aus Glas- oder Kohlefasern eingesogen. So füllen sich die Zwischenräume zwischen den Fasern mit Kunstharz und die Saugseitenschale bzw. Druckseitenschale des Rotorblatts entsteht.

Zur Verbindung der Saugseitenschale mit der Druckseitenschale werden diese in einer Fügeebene miteinander verklebt. Hierzu ist an der Vorderkante des Rotorblatts eine Klebelasche vorgesehen. Ein zwischen der Klebelasche und den Rotorblattschalen vorhandener Klebespalt wird zur Herstellung der Verbindung mit Klebstoff vergossen.

Während der Herstellung der Saugseiten- oder Druckseitenschale wird die Klebelasche an der Innenseite der Rotorblattschale auflaminiert. In einem Harzinfusionsverfahren wird die Klebelasche gemeinsam mit dem Faserverbundwerkstoff der Rotorblattschale mit Harz getränkt und anschließend mit dieser ausgehärtet. Alternativ handelt es sich bei der Klebelasche um ein separat gefertigtes Bauteil, welches im Bereich der Vorderkante des Rotorblatts in dessen Innenraum eingelegt und nach dem Schließen der Form in Richtung der Vorderkante des Rotorblatts gezogen wird.

Rotorblätter sind während des Betriebs der Windkraftanlage dynamischen Belastungen ausgesetzt. Hierdurch entstehen auch in den Fügebereichen zwischen den Rotorblattschalen hohe Belastungen.

Aus DE 10 2008 055 479 A1 ist ein Rotorblatt bekannt, welches aus einem Druckseitenelement und einem Saugseitenelement aufgebaut ist. Sowohl das Druckseitenelement als auch das Saugseitenelement weisen jeweils Abschrägungen auf, in denen sich die Wandstärke verringert. Ein Druckseiten-Vorformling-Element enthält mehrere Druckseitenwand-Glasfaserschichten und eine Schaumstoffschicht. Zu beiden Seiten des Schaumstoffs werden Glasfaserschichten angeordnet. Der Kern aus Schaumstoffmaterial ist abgeschrägt.

Ausgehend von diesem Stand der Technik ist es eine Aufgabe der Erfindung, ein Rotorblatt für eine Windkraftanlage sowie ein Verfahren zum Herstellen eines Rotorblatts anzugeben, wobei eine belastbare und zuverlässige Verbindung einer Druckseitenschale und einer Saugseitenschale des Rotorblattes bereitgestellt und der konstruktive Aufwand möglichst gering gehalten werden soll.

Die Aufgabe wird gelöst durch ein Rotorblatt für eine Windkraftanlage, umfassend eine Saugseitenschale und eine Druckseitenschale, die aus einem Faserverbundwerkstoff hergestellt sind, wobei ein vorderer Rand der Saugseitenschale und ein vorderer Rand der Druckseitenschale an einer Profilvorderseite des Rotorblatts miteinander verbunden sind und wobei das Rotorblatt dadurch fortgebildet ist, dass der vordere Rand der Saugseitenschale und/oder der vordere Rand der Druckseitenschale zumindest abschnittsweise, insbesondere einseitig, mit einer Fase versehen sind, wobei der Faserverbundwerkstoff aus übereinandergeschichteten Fasergelegen oder Fasermatten hergestellt ist, welche, betrachtet in einer Querschnittsebene senkrecht zu einer Längsrichtung des Rotorblatts, eine Anzahl übereinanderliegender Faserlagen bilden, wobei in einem durch die Fase festgelegten Endbereich eine Wandstärke der Saugseitenschale und/oder der Druckseitenschale in Richtung des vorderen Randes geringer wird und eine Anzahl der übereinanderliegenden Faserlagen in dieser Richtung abnimmt.

Die Erfindung beruht auf der Erkenntnis, dass die am vorderen Rand der Druckseitenschale bzw. der Saugseitenschale vorgesehene Fase bewirkt, dass das Material des Rotorblatts im Bereich der Vorderkante einen sehr geringen Steifigkeitssprung aufweist. Dieses ist dadurch bedingt, dass die Materialstärke der Saugseitenschale bzw. der Druckseitenschale im Bereich der Profilvorderseite des Rotorblatts in Richtung der Trennebene zwischen den Rotorblattschalen abnimmt. Das Material des Rotorblatts weist im Vergleich zu herkömmlichen Rotorblättern im Bereich der Vorderkante einen deutlich geringeren Steifigkeitssprung auf.

Die Fase wird dadurch realisiert, dass die Fasergelege oder durch Fasermatten gebildete Faserlagen in Rechnung der Trennebene abgestuft sind. Mit anderen Worten nimmt die Anzahl der übereinander geschichteten Faserlagen in Richtung der Profilvorderseite des Rotorblatts ab. So ist es möglich, eine Fase in diesem Bereich der Rotorblattschale vorzusehen. Infolge der reduzierten Materialstärke lässt sich außerdem die Klebefläche für die Verklebung der beiden Rotorblattschalen besser aktivieren.

Ein weiterer Vorteil besteht darin, dass die übereinanderliegenden Faserlagen im Bereich der Profilvorderseite des Rotorblatts weniger stark gekrümmt werden, als dies bei herkömmlichen Lösungen der Fall ist. Auch diese großen Biegungsradien der Faserlagen führen zu einem sehr geringen Steifigkeitssprung des Materials des Rotorblatts im Bereich der Profilvorderseite.

Vorteilhaft wird ein robustes Rotorblatt mit verbesserter Lebensdauer bereitgestellt. Aufgrund der verbesserten Möglichkeit die zu verklebenden Oberflächen zu aktivieren, ist die Qualität dieser Klebeverbindung höher. Dies senkt das Risiko für Risse im Bereich der Profilvorderseite.

Die Struktur des Geleges der Saugseitenschale bzw. der Druckseitenschale ist im Bereich der Fase abgestuft. Diese Betrachtung setzt voraus, dass nicht das Faserverbundmaterial als ganzes, also sowohl das Fasergelege als auch das Kunstharz, sondern lediglich die Faserlagen als solche betrachtet werden. Das Faserverbundmaterial weist eine Fase auf, die eingebetteten Faserlagen sind im Bereich dieser Fase abgestuft. Dies bedeutet, dass die im Materialquerschnitt anzutreffende Anzahl von Faserlagen - betrachtet entlang einer Richtung, die senkrecht zu einer Außenseite der Rotorblattschale verläuft - in Richtung des vorderen Randes der Druckseitenschale bzw. der Saugseitenschale abnimmt. Dies gilt lediglich für eine entsprechende Betrachtung im Bereich der Fase. In Bereichen außerhalb der Fase ist die Anzahl der Faserlagen durch die Konstruktion des Rotorblatts bestimmt. Selbstredend ist es möglich, dass auch in diesen Bereichen die Anzahl der übereinandergeschichteten Faserlagen zu- oder abnimmt.

Bevorzugt weist die Saugseitenschale und/oder die Druckseitenschale eine innenliegende Fase auf. Die angefaste Oberfläche, d.h. die schräge Oberfläche, welche die Fase bildet, ist also in Richtung einer Innenseite des Rotorblatts geneigt. So wird die Möglichkeit geschaffen, auf der Innenseite der Saugseitenschale bzw. der Druckseitenschale, also im Innenraum des Rotorblatts, eine Klebelasche vorzusehen. Mit dieser Klebelasche werden die beiden Rotorblattschalen im Bereich der Fase verbunden, insbesondere verklebt.

Gemäß einer weiteren vorteilhaften Ausführungsform ist vorgesehen, dass sich die Fase über eine vollständige Materialstärke der Saugseitenschale und/oder der Druckseitenschale von einer Außenseite bis zu einer Innenseite der Saugseitenschale und/oder der Druckseitenschale erstreckt.

Mit anderen Worten verjüngt sich die Saugseitenschale bzw. die Druckseitenschale im Bereich ihres vorderen Randes soweit, dass an der äußersten Spitze im Extremfall nur noch eine einzige Faserlage vorgesehen ist. Um im Bereich der Profilvorderseite des Rotorblatts dennoch eine ausreichende Materialstärke bereitzustellen, ist bevorzugt die Klebelasche so ausgeführt, dass sie die in Folge der Fase fehlende Materialstärke kompensiert. So wird die Möglichkeit geschaffen, dass im Bereich der Profilvorderseite eine Materialstärke des Rotorblatts vorliegt, welche gegenüber den übrigen Bereichen des Rotorblatts durch die Klebelasche wieder wesentlich erhöht noch wesentlich verringert ist. Eine unnötig harte und steife oder aufgrund zu geringer Materialstärke geschwächte Ausbildung der Profilvorderseite des Rotorblatts wird vorteilhaft vermieden.

Ferner ist das Rotorblatt dadurch fortgebildet, dass eine Klebelasche vorhanden ist, welche im Bereich der Fase mit einer Innenseite der Saugseitenschale oder einer Innenseite der Druckseitenschale verbunden ist.

Gemäß einer Weiterbildung ist ferner vorgesehen, dass die Saugseitenschale und die Druckseitenschale mit einer Fase versehen sind, wobei die Klebelasche mit der Saugseitenschale oder der Druckseitenschale durch Anwendung eines Harzinfusionsverfahrens verbunden ist und wobei zwischen der Fase der anderen Rotorblattschale und der Klebelasche ein, insbesondere mit einem Klebstoff gefüllter, Klebespalt vorhanden ist.

Der in dem Klebespalt vorhandene Klebstoff ist infolge der Konstruktion der Rotorblattschalen, bei denen eine Fase vorgesehen ist, vorteilhaft zuverlässig aktivierbar. Eine elastische und zuverlässige Verbindung der beiden Rotorblattschalen wird zur Verfügung gestellt.

Gemäß einer weiteren vorteilhaften Ausführungsform ist vorgesehen, dass die Saugseitenschale und/oder die Druckseitenschale eine außenliegende Fase aufweisen, wobei, betrachtet in einer Querschnittsebene senkrecht zu einer Längsrichtung des Rotorblatts, die Fase lediglich in einem Teilbereich des Querschnitts der Rotorblattschale verläuft.

Gemäß einer Weiterbildung ist ferner vorgesehen, dass in einem verbleibenden weiteren Teilbereich des Querschnitts der Rotorblattschale, in welchem die Fase nicht vorhanden ist, durchgängige Faserlagen vorhanden sind, welche die Fase überragen und eine Klebelasche ausbilden.

Vorteilhaft wird die Klebelasche aus den Faserlagen einer der beiden Rotorblattschalen gebildet. Eine unnötig große Anzahl Faserlagen, wie sie beispielsweise durch auflaminierte Klebelaschen hergestellt wird, wenn keine entsprechende Fase im Bereich des vorderen Randes der Rotorblattschalen vorgesehen wird, wird vorteilhaft vermieden. Gleiches gilt, wenn eine zusätzliche Klebelasche vorgesehen wird. Auch diese führt zu einer unerwünschten Erhöhung der übereinandergeschichteten Faserlagen. Erfindungsgemäß wird eine zuverlässige, gut aktivierbare und elastische Verbindung der beiden Rotorblattschalen bereitgestellt.

Gemäß einer weiteren Ausführungsform ist ferner vorgesehen, dass die Fase, betrachtet in einer Querschnittsebene senkrecht zu einer Längsrichtung des Rotorblatts, eine konvexe Form hat.

Eine konvexe Form der Fase bewirkt vorteilhaft einen Übergang zwischen den beiden Rotorblattschalen, bei dem die Faserlagen mit großen Krümmungsradien, also mit geringer Biegung, im Bereich der Trennebene bzw. im Bereich des Klebespalts geführt werden. Dies wirkt sich vorteilhaft auf die Stabilität des Faserverbundwerkstoffs in diesem Bereich aus.

Die erfindungsgemäße Aufgabe wird ferner gelöst durch ein Verfahren zum Herstellen eines Rotorblatts für eine Windkraftanlage, wobei das Rotorblatt eine Saugseitenschale und eine Druckseitenschale umfasst, die aus einem Faserverbundwerkstoff hergestellt sind, wobei ein vorderer Rand der Saugseitenschale und ein vorderer Rand der Druckseitenschale an einer Profilvorderseite des Rotorblatts miteinander verbunden sind und wobei das Verfahren dadurch fortgebildet ist, dass bei dem Verfahren der vordere Rand der Saugseitenschale und/oder der vordere Rand der Druckseitenschale zumindest abschnittsweise, insbesondere einseitig, mit einer Fase versehen werden, wobei der Faserverbundwerkstoff aus übereinandergeschichteten Fasergelegen oder Fasermatten hergestellt ist, welche, betrachtet in einer Querschnittsebene senkrecht zu einer Längsrichtung des Rotorblatts, eine Anzahl übereinanderliegender Faserlagen bilden, wobei während der Herstellung der Saugseitenschale und/oder der Druckseitenschale die Faserlagen derart in eine Form eingelegt werden, dass eine Anzahl der übereinanderliegenden Faserlagen in Richtung des vorderen Randes der Saugseitenschale und/oder der Druckseitenschale geringer wird, so dass eine Wandstärke der Saugseitenschale und/oder der Druckseitenschale in Richtung des vorderen Randes geringer wird.

Ferner ist insbesondere vorgesehen, dass die Faserlagen derart in eine Form eingelegt werden, dass die Saugseitenschale und/oder die Druckseitenschale eine innenliegende Fase aufweisen.

Gleiche oder ähnliche Vorteile, wie sie bereits im Hinblick auf das Rotorblatt selbst erwähnt wurden, treffen auch auf das Verfahren zum Herstellen eines Rotorblatts zu und sollen an dieser Stelle nicht wiederholt werden.

Gemäß einer weiteren Ausführungsform ist das Verfahren dadurch fortgebildet, dass eine Klebelasche im Bereich der Fase mit einer Innenseite der Saugseitenschale oder einer Innenseite der Druckseitenschale verbunden wird, wobei insbesondere die Saugseitenschale und die Druckseitenschale mit einer Fase versehen werden und die Klebelasche mit der Saugseitenschale oder der Druckseitenschale durch Anwendung eines Harzinfusionsverfahrens verbunden wird und wobei ferner insbesondere zwischen der Fase der anderen Rotorblattschale und der Klebelasche ein Klebespalt vorhanden ist, welcher mit einem Klebstoff gefüllt wird.

Dieses Verfahren ist dadurch fortgebildet, dass der Faserverbundwerkstoff aus übereinandergeschichteten Fasergelegen oder Fasermatten hergestellt ist, welche, betrachtet in einer Querschnittsebene senkrecht zu einer Längsrichtung des Rotorblatts, eine Anzahl übereinanderliegender Faserlagen bilden, wobei während der Herstellung der Saugseitenschale und/oder der Druckseitenschale die Faserlagen derart in eine Form eingelegt werden, dass die Saugseitenschale und/oder die Druckseitenschale eine außenliegende Fase aufweisen, wobei, betrachtet in der Querschnittsebene, die Fase lediglich in einem Teilbereich des Querschnitts der Rotorblattschale verläuft.

Zur Herstellung eines solchen Rotorblatts ist ferner vorgesehen, dass an der Form zum Herstellen der Saugseitenschale und/oder der Druckseitenschale eine bogenförmige Nasenklebewinkelform vorgesehen wird, wobei die Faserlagen derart in die Form und an die Nasenklebewinkelform angelegt werden, so dass die außenliegende Fase gebildet wird und in einem verbleibenden weiteren Teilbereich des Querschnitts der Rotorblattschale, in welchem die Fase nicht vorhanden ist, durchgängige Faserlagen vorhanden sind, welche die Fase überragen und eine Klebelasche ausbilden und die Fase, betrachtet in der Querschnittsebene, eine konvexe Form hat.

Die Verwendung einer gebogenen Nasenklebewinkelform erlaubt es, vorteilhaft die Saugseitenschale oder die Druckseitenschale mit einer konvex geformten Fase herzustellen, so dass im Bereich der Fase die Anzahl übereinanderliegender Faserlagen in Richtung des vorderen Randes abnimmt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.

Es zeigen:
- Fig. 1: schematisch eine Windkraftanlage,
- Fig. 2 bis 5: jeweils eine schematische Querschnittsansicht durch ein Rotorblatt einer Windkraftanlage im Bereich der Profilvorderseite.

In den Zeichnungen sind jeweils gleiche oder gleichartige Elemente und/oder Teile mit denselben Bezugsziffern versehen, so dass von einer erneuten Vorstellung jeweils abgesehen wird.

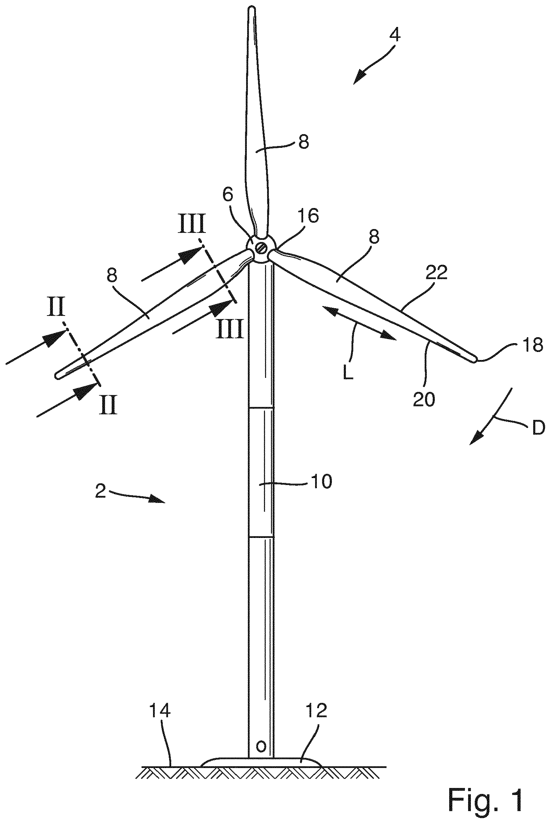

Fig. 1 zeigt schematisch eine Windkraftanlage 2, umfassend einen Rotor 4 mit einer Rotornabe 6, an der eine Mehrzahl von Rotorblättern 8 vorhanden ist. Der Rotor 4 ist auf einer Tragestruktur 10, beispielsweise einem Turm, montiert. Die Tragestruktur 10 befindet sich auf einem Fundament 12, welches lediglich beispielhaft auf Land 14 gegründet ist. Es ist ebenso möglich, dass es sich bei der Windkraftanlage 2 um eine Offshore-Windkraftanlage handelt, deren Fundament 12 im Seeboden verankert ist und deren Tragestruktur 10 aus einem Gewässer, beispielsweise der See, herausragt. Im Betrieb der Windkraftanlage 2 dreht sich der Rotor 4 in Drehrichtung D.

Die Rotorblätter 8 erstrecken sich ausgehend von einer Rotorblattwurzel 16, welche mit der Rotornabe 6 verbunden ist, in einer Längsrichtung L, welche beispielhaft für eines der Rotorblätter 8 dargestellt ist, bis zu einer Rotorblattspitze 18. Jedes der Rotorblätter 8 weist eine Profilvorderseite 20 auf, welche bei Drehung des Rotors 4 in Drehrichtung D der anströmenden Luftmasse zugewandt ist. An der gegenüberliegenden Seite des Rotorblatts 8 befindet sich eine Profilhinterkante 22. Aus Gründen der Übersichtlichkeit sind die Bezugszeichen für die Profilvorderseite 20 und die Profilhinterkante 22 beispielhaft für lediglich eines der Rotorblätter 8 des dargestellten Rotors 4 vergeben.

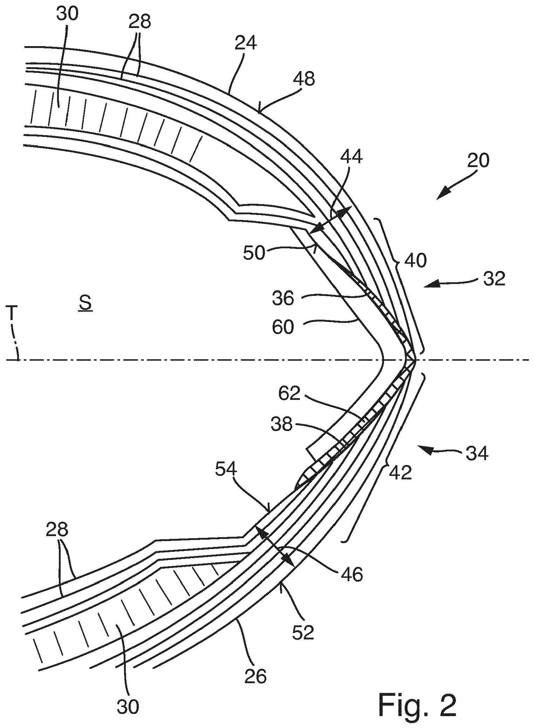

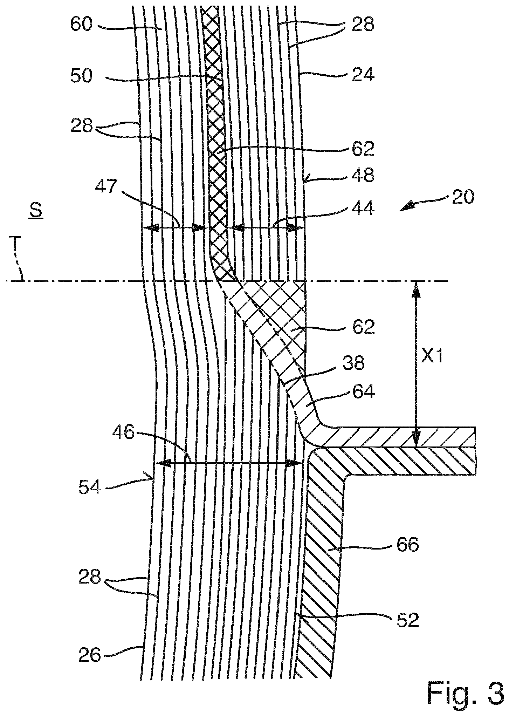

Fig. 2 bis 5 zeigen jeweils schematische Querschnitte durch ein Rotorblatt 8. Während die Fig. 2, 4 und 5 einen abschnittsweisen Querschnitt entlang der in Fig. 1 mit II-II bezeichneten Ebene in Bereich der Rotorblattspitze 18 zeigen, zeigt Fig. 3 einen abschnittsweisen Querschnitt entlang der in Fig. 1 mit III-III bezeichneten Ebene im Bereich der Rotorblattwurzel 16. Die dargestellten Querschnittsansichten zeigen abschnittsweise einen Teil des Rotorblatts 8 im Bereich der Profilvorderseite 20.

Ein Rotorblatt 8 der Windkraftanlage 2 umfasst eine Saugseitenschale 24 und eine Druckseitenschale 26. Im Betrieb der Windkraftanlage 2 ist die Saugseitenschale 24 dem Wind zugewandt, ihre Oberfläche bildet die Saugseite des Rotorblattprofils aus. Entsprechend ist die Druckseitenschale 26 dem Wind abgewandt. Die Oberfläche der Druckseitenschale 26 bildet die Saugseite des Rotorblattprofils.

Die Saugseitenschale 24 und die Druckseitenschale 26 sind entlang einer Trennebene T, welche als strichpunktierte Linie dargestellt ist, zusammengefügt. Sie sind aus einem Faserverbundwerkstoff hergestellt, der aus mit Harz, beispielsweise Epoxidharz, vergossenen Fasergelegen oder Fasermatten besteht, welche innerhalb des Faserverbundwerkstoffs übereinander liegende Faserlagen 28 ausbilden. Die Faserlagen 28 sind schematisch dargestellt. Lediglich aus Gründen der Übersichtlichkeit sind nur wenige der tatsächlich vorhandenen Faserlagen 28 dargestellt und von diesen sind lediglich einige mit Bezugszeichen versehen.

In einem Bereich der Saugseitenschale 24 und der Druckseitenschale 26, welcher von der Trennebene T weiter entfernt liegt, ist außerdem ein geschäumtes Material 30 vorgesehen, welches beidseitig von Faserlagen 28 bzw. Faserverbundwerkstoff umschlossen ist. Sowohl die Saugseitenschale 24 als auch die Druckseitenschale 26 weisen jeweils einen der Trennebene T zugewandten vorderen Rand 32, 34 auf. Unter einem vorderen Rand 32 der Saugseitenschale 24 bzw. unter einem vorderen Rand 34 der Druckseitenschale 26 wird ein Randbereich der Rotorblattschale 24, 26 verstanden, der der Trennebene T im Bereich der Profilvorderseite 20 zugewandt ist und sich entlang des Rotorblatts 8 in dessen Längsrichtung L erstreckt.

Im Bereich des vorderen Randes 32 der Saugseitenschale 24 und ebenso im Bereich des vorderen Randes 34 der Druckseitenschale 26 ist eine Fase 36, 38 vorhanden. Die Fase 36, 38 erstreckt sich zumindest abschnittsweise in Längsrichtung L des Rotorblatts 8. Insbesondere erstreckt sich die Fase 36,38 entlang der vollständigen Länge des Rotorblatts 8 im Bereich des vorderen Randes 32, 34 der Saugseitenschale 24 bzw. der Druckseitenschale 26. Es handelt sich bevorzugt um eine einseitige Fase 36, 38. Mit anderen Worten ist die Fase 36,38 entweder auf einer Innenseite oder auf einer Außenseite der jeweiligen Rotorblattschale 24,26 vorgesehen. Gemäß dem in Fig. 2 dargestellten Ausführungsbeispiel ist die jeweilige Fase 36,38 der Rotorblattschalen 24, 26 einem von diesen umschlossenen Innenraum S des Rotorblatts 8 zugewandt.

Bei dem in Fig. 2 dargestellten Ausführungsbeispiel definiert die Fase 36, 38 den Endbereich 40, 42 der Saugseitenschale 24 bzw. der Druckseitenschale 26. Im Endbereich 40, 42 nimmt eine Wandstärke 44, 46 der Saugseitenschale 24 bzw. der Druckseitenschale 26 ab. Die Wandstärke 44, 46 nimmt in Richtung des vorderen freien Endes der Druckseitenschale 26 bzw. der Saugseitenschale 24, also in Richtung einer vorderen Kante der Saugseitenschale 24 bzw. der Druckseitenschale 26, die in oder nahe der Trennebene T liegt, ab. Die abnehmende Wandstärke 44, 46 wird realisiert, indem die Anzahl der übereinander geschichteten Faserlagen 28 in Richtung des vorderen Randes 32, 34 der Rotorblattschalen verringert wird.

Die Fase 36, 38 erstreckt sich ferner über die vollständige Materialstärke, also über die vollständige Wandstärke 44, 46 der Saugseitenschale 24 bzw. der Druckseitenschale 26. Mit anderen Worten verläuft die Fase 36 der Saugseitenschale 24 von einer Außenseite 48 der Saugseitenschale 24 bis zu einer Innenseite 50 dieser Rotorblattschale. Gleiches gilt für die Druckseitenschale 26; dort verläuft die Fase 38 ebenfalls von einer Außenseite 52 bis zu einer Innenseite 54.

An der Innenseite 50 der Saugseitenschale 24 ist eine Klebelasche 60 vorgesehen. Sie ist im Bereich der Fase 36 mit der Innenseite 50 der Saugseitenschale 24 verbunden. Insbesondere besteht die Klebelasche 60 aus einem gleichen oder ähnlichen Material wie die Rotorblattschalen 24, 26 selbst, also aus einem Faserverbundwerkstoff. Die Klebelasche 60 ist bevorzugt mit dem Faserverbundwerkstoff der Saugseitenschale 24 in einem Harzinfusionsverfahren, welches ferner bevorzugt zur Herstellung der Rotorblattschalen 24, 26 eingesetzt wird, verbunden worden. Die Klebelasche 60 bildet bevorzugt einen integralen Bestandteil der Saugseitenschale 24. Gleiches gilt selbstverständlich, wenn die Klebelasche 60, gemäß einem weiteren Ausführungsbeispiel, an der Druckseitenschale 26 vorhanden ist. Gemäß diesem weiteren nicht dargestellten Ausführungsbeispiel ist die Klebelasche 60 mit der Druckseitenschale 26 in gleicher Weise verbunden, wie dies zuvor im Hinblick auf die Saugseitenschale 24 erwähnt wurde.

Gemäß dem in Fig. 2 dargestellten Ausführungsbeispiel befindet sich zwischen der Klebelasche 60 und der Druckseitenschale 26 ein Klebespalt 62, welcher mit einem Klebstoff gefüllt ist. Die beiden Rotorblattschalen 24, 26 werden miteinander verbunden, indem der in dem Klebespalt 62 vorhandene Klebstoff eingebracht und anschließend beispielsweise thermisch aktiviert wird.

Vorteilhaft erlaubt die an der Saugseitenschale 24 und an der Druckseitenschale 26 vorhandene Fase 36, 38, dass eine Material- bzw. Wandstärke 44, 46 der Rotorblattschale 24, 26 im Bereich der Profilvorderseite 20 durch die Klebelasche 60 nicht wesentlich erhöht wird. So behält die Rotorblattschale 24,26 auch im Bereich der Profilvorderseite 20 ihre Elastizität und Flexibilität, ohne dass unnötig große Sprünge der Rotorblattsteifigkeit im Bereich der Profilvorderseite 20 hingenommen werden müssen. Ferner ist es möglich, den im Klebespalt 62 vorhandenen Klebstoff optimal zu aktivieren, so dass eine zuverlässige Verbindung zwischen der Klebelasche 60 und der Druckseitenschale 26 bereitgestellt ist.

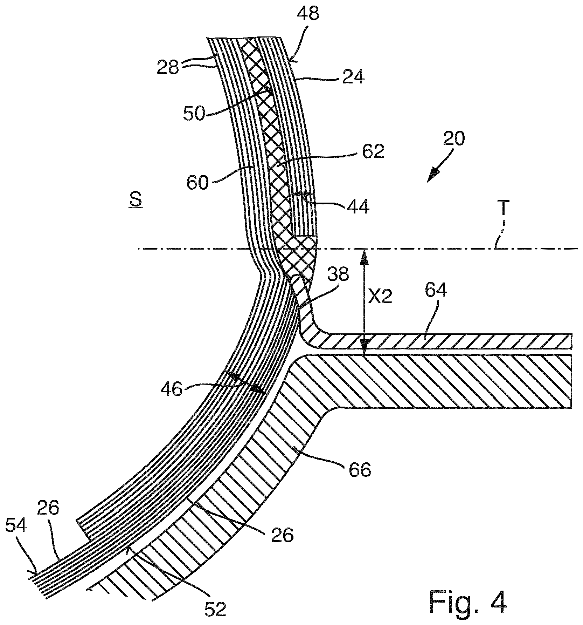

Die Fig. 3 und 4 zeigen weitere Querschnittsansichten eines Rotorblatts 8 gemäß einem weiteren Ausführungsbeispiel. Während Fig. 3 einen bereichsweise Querschnitt nahe der der Rotorblattwurzel 16 (vgl. Fig. 1) und in etwa entlang der Schnittlinie III-III zeigt, ist in Fig. 4 ein abschnittsweiser Querschnitt durch das Rotorblatt 8 im Bereich der Rotorblattspitze 18 gezeigt, welcher sich in etwa entlang der Schnittebene II-II erstreckt.

Gemäß dem dargestellten Ausführungsbeispiel ist die Druckseitenschale 26 mit einer außenliegenden Fase 38 versehen. Lediglich beispielhaft ist es die Druckseitenschale 26, die mit der Fase 38 versehen ist. Gemäß einem weiteren nicht dargestellten Ausführungsbeispiel ist es ebenso möglich, durch spiegelbildlichen Aufbau, die Saugseitenschale 24 mit einer entsprechenden Fase 38 versehen.

Die dargestellte Fase 38 verläuft lediglich in einem Teilbereich des Querschnitts der Druckseitenschale 26. Mit anderen Worten erstreckt sich die Fase 38 im Bereich der Trennebene T lediglich über einen Bruchteil der Wandstärke 46 der Druckseitenschale 26. Eine Wandstärke 44 der Saugseitenschale 24 ist um den gleichen Betrag verringert um den die Wandstärke 46 der Druckseitenschale 26 im Bereich der Fase 38 zurückspringt. Ein verbleibender Teilbereich des Querschnitts der Druckseitenschale 26 bzw. eine verbleibende Wandstärke 47 wird dazu verwendet, durchgängige Faserlagen 28 zu realisieren, welche eine an die Druckseitenschale 26 angeformte Klebelasche 60 bilden. Es sind also durchgängige Faserlagen 28 vorhanden, welche die Fase 38 überragen. Zwischen der Klebelasche 60 und der Innenseite 50 der Saugseitenschale 24 ist der Klebespalt 62 vorgesehen, welcher zur Verbindung der beiden Rotorblattschalen 24, 26 mit Klebstoff gefüllt wird.

In der in Fig. 3 dargestellten Querschnittsansicht hat die Fase 38 eine konvexe Form. Dies wird durch den Einsatz einer Nasenklebewinkelform 64 erreicht, welcher in Richtung des Innenraums S gebogen ist. Der zur Herstellung der Fase 38 verwendete Schenkel der Nasenklebewinkelform 64 ist derart gebogen, dass sein freies Ende, welches im Bereich der Trennebene T liegt, gegenüber einer Außenseite 48, 52 der Rotorblattschalen 24, 26 in Richtung des Innenraums S zurück versetzt ist. Der andere Schenkel der Nasenklebewinkelform 64 schließt bündig an eine Form 66 an, welche zur Herstellung der Druckseitenschale 26 eingesetzt wird. In die Form 66 werden zur Herstellung der Druckseitenschale 26 Faserlagen 28 eingelegt, deren Länge von der Außenseite 52 zur Innenseite 54 jeweils in Richtung der Trennebene T länger wird. Mit anderen Worten sind die Faserlagen 28 im Bereich der Fase 38 abgestuft, so dass nach anschließender Harzinfusion und Aushärten des Materials der Druckseitenschale 26 ein Faserverbundwerkstoff mit einer Fase 38 erhalten wird, deren Form durch die Form der Nasenklebewinkelform 64 bestimmt ist.

Fig. 4 zeigt in einer weiteren schematischen Querschnittsansicht die Saugseitenschale 24 und die Druckseitenschale 26 im Bereich der Profilvorderseite 20 in einer Ebene nahe der Rotorblattspitze 18. Die Anzahl der zur Herstellung der Rotorblattschalen 24, 26 verwendeten Faserlagen 28 ist im Vergleich zu einem Bereich nahe der Rotorblattwurzel 16 geringer. Lediglich aus Gründen der Übersichtlichkeit ist die Abnahme der Anzahl der Faserlagen 28 in den Fig. 3 und 4 nicht in dem Umfang dargestellt, wie er tatsächlich stattfindet.

Ähnlich wie im Bereich der Rotorblattwurzel 16 ist die Saugseitenschale 24 auch im Bereich der Rotorblattspitze 18 mit einer konkaven Fase 38 versehen. Die zu ihrer Herstellung eingesetzte Nasenklebewinkelform 64 liegt ebenso wie im Bereich der Rotorblattwurzel 16 mit einem Schenkel auf der zur Herstellung der Druckseitenschale 26 verwendeten Form 66 auf. Ein Abstand X1 zu der Trennebene T (vgl. auch Fig. 3) ist im Bereich der Rotorblattwurzel 16 größer als ein Abstand X2 zwischen einer Unterseite des aufliegenden Schenkels der Nasenklebewinkelform 64 und der Trennebene T im Bereich der Rotorblattspitze 18. Der Abstand X1 ist größer als der Abstand X2.

Mit anderen Worten ist ein der Außenseite 52 der Druckseitenschale 26 zugewandtes Ende der Fase 38 im Bereich der Rotorblattspitze 18 (Abstand X2) von der Trennebene T weniger weit entfernt als ein der Außenseite 52 der Druckseitenschale 26 zugewandtes Ende der Fase 38 (Abstand X1) im Bereich der Rotorblattwurzel 16.

Durch den vergrößerten Abstand im Bereich der Rotorblattwurzel 16 wird sichergestellt, dass die Faserlagen 28, welche zur Ausbildung der Klebelasche 60 über die Fase 38 hinaus geführt werden, mit großen Biegungsradien, also geringer Krümmung im betreffenden Bereich, insbesondere im Bereich der Trennebene T, geführt werden.

Die Klebelasche 60 ist bei dem in den Fig. 3 und 4 dargestellten Ausführungsbeispiel direkt an die Faserlagen 28 der Druckseitenschale 26 laminiert. Mit anderen Worten wird die Klebelasche 60 insbesondere in einem Harzinfusionsverfahren gemeinsam mit der Druckseitenschale 26 hergestellt.

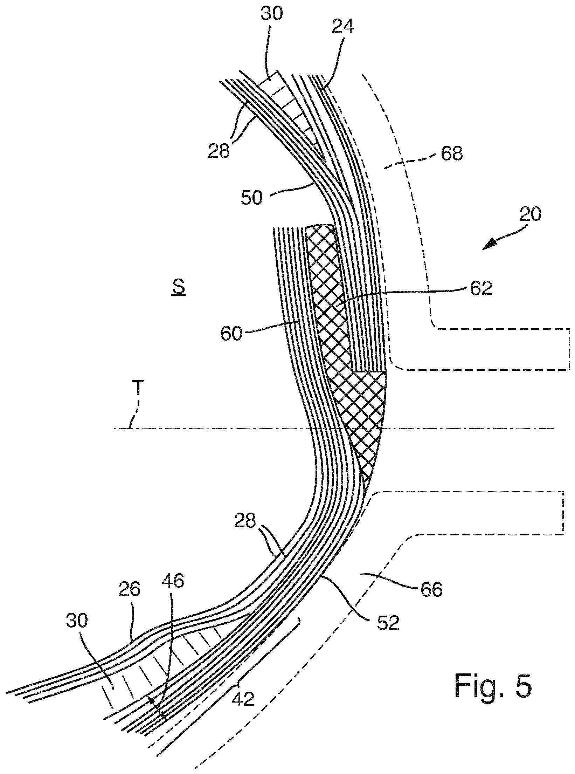

Fig. 5 zeigt ein weiteres Ausführungsbeispiel, welches abschnittsweise ein Rotorblatt 8 im Bereich der Profilvorderseite 20 und im Bereich der Trennebene T zeigt. Die Fase 38 befindet sich außenliegend an der Druckseitenschale 26 in einem nur teilweise dargestellten langgestreckten Bereich, welcher ebenfalls als Endbereich 42 aufgefasst werden soll. Im Endbereich 42 wird die Anzahl der Faserlagen 28 entlang der Wandstärke 46 der Druckseitenschale 26 geringer. Mit anderen Worten verjüngt sich die Druckseitenschale 26 im Endbereich 42, bis diese in Richtung der Trennebene T fortschreitend die gewünschte Materialstärke erreicht hat. Im Bereich der Trennebene T wird bzw. werden die zur Herstellung der Druckseitenschale 26 verwendeten Faserlagen 28 zur Ausbildung einer Klebelasche 60 gebogen. So wird ein Klebespalt 62 zwischen einer Innenseite 50 der Saugseitenschale 24 und einer Außenseite 52 der Druckseitenschale 26 ausgebildet. Der Klebespalt 62 wird mit Klebstoff verfüllt und zur Verbindung der beiden Rotorblattschalen 24, 26 ausgehärtet. Ebenfalls in Fig. 5 dargestellt ist eine weitere Form 68, welche zur Herstellung der Saugseitenschale 24 dient.

Für alle Ausführungsbeispiele gilt, dass entsprechende Maßnahmen, welche beispielhaft an der Druckseitenschale 26 durchgeführt werden, spiegelbildlich in gleicher Weise an der Saugseitenschale 24 durchgeführt werden können, wobei die im Zusammenhang mit dieser Saugseitenschale 24 beschriebenen Maßnahmen in einem solchen Fall an der Druckseitenschale 26 vorzunehmen wären.

Bei einem Verfahren zum Herstellen eines Rotorblatts 8 für eine Windkraftanlage 2 werden die einzelnen Faserlagen 28 in die Formen 66, 68 eingelegt, wobei eine Nasenklebewinkelform 64 zur Herstellung der Fase 36, 38 zum Einsatz kommen kann, sofern es sich um eine außenliegende Fase 36, 38 handelt. Soll eine innenliegende Fase 36, 38 realisiert werden, so werden entsprechend abgestuft lange Faserlagen 28 verwendet. Die Faserlagen 28 werden anschließend in einem Harzinfusionsverfahren zur Herstellung eines Faserverbundwerkstoffs miteinander verbunden. Insbesondere wird in diesem Herstellungsschritt die Klebelasche 60 mit einer der beiden Rotorblattschalen 24, 26 verbunden, indem diese an das Material der entsprechenden Rotorblattschale 24,26 auf- oder anlaminiert wird. Unter Ausbildung eines Klebespalts 62 werden anschließend die Rotorblattschalen 24, 26 zusammengefügt. In dem Klebespalt 62 wird ein geeigneter Klebstoff zur Verbindung der beiden Rotorblattschalen 24, 26 eingefüllt und anschließend, beispielsweise durch Hitzeeinwirkung, aktiviert, so dass die beiden Rotorblattschalen 24, 26 zur Herstellung eines Rotorblatts 8 miteinander verbunden werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windkraftanlage
- 4: Rotor
- 6: Rotornabe
- 8: Rotorblatt
- 10: Tragestruktur
- 12: Fundament
- 14: Land
- 16: Rotorblattwurzel
- 18: Rotorblattspitze
- 20: Profilvorderseite
- 22: Profilhinterkante
- 24: Saugseitenschale
- 26: Druckseitenschale
- 28: Faserlagen
- 30: geschäumtes Material
- 32, 34: vorderer Rand
- 36, 38: Fase
- 40, 42: Endbereich
- 44, 46, 47: Wandstärke
- 48, 52: Außenseite
- 50, 54: Innenseite
- 60: Klebelasche
- 62: Klebespalt
- 64: Nasenklebewinkelform
- 66: Form
- 68: weitere Form
- L: Längsrichtung
- D: Drehrichtung
- T: Trennebene
- S: Innenraum

## Patentansprüche

1. Rotorblatt (8) für eine Windkraftanlage (2), umfassend eine Saugseitenschale (24) und eine Druckseitenschale (26), die aus einem Faserverbundwerkstoff hergestellt sind, wobei ein vorderer Rand (32) der Saugseitenschale (24) und ein vorderer Rand (34) der Druckseitenschale (26) an einer Profilvorderseite (20) des Rotorblatts (8) miteinander verbunden sind, **dadurch gekennzeichnet, dass** der vordere Rand (32) der Saugseitenschale (24) und/oder der vordere Rand (34) der Druckseitenschale (26) zumindest abschnittsweise, insbesondere einseitig, mit einer Fase (36, 38) versehen sind, wobei der Faserverbundwerkstoff aus übereinandergeschichteten Fasergelegen oder Fasermatten hergestellt ist, welche, betrachtet in einer Querschnittsebene senkrecht zu einer Längsrichtung (L) des Rotorblatts (8), eine Anzahl übereinanderliegender Faserlagen (28) bilden, wobei in einem durch die Fase (36,38) festgelegten Endbereich (40, 42) eine Wandstärke (44,46) der Saugseitenschale (24) und/oder der Druckseitenschale (26) in Richtung des vorderen Randes (32, 34) geringer wird und eine Anzahl der übereinanderliegenden Faserlagen (28) in dieser Richtung abnimmt.

2. Rotorblatt (8) nach Anspruch 1, **dadurch gekennzeichnet, dass** die Saugseitenschale (24) und/oder die Druckseitenschale (26) eine innenliegende Fase (36, 38) aufweisen.

3. Rotorblatt (8) nach Anspruch 2, **dadurch gekennzeichnet, dass** sich die Fase (36, 38) über eine vollständige Wandstärke (44, 46) der Saugseitenschale (24) und/oder der Druckseitenschale (26) von einer Außenseite (48, 52) bis zu einer Innenseite (50, 54) der Saugseitenschale (24) und/oder der Druckseitenschale (26) erstreckt.

4. Rotorblatt (8) nach Anspruch 2 oder 3, **dadurch gekennzeichnet, dass** eine Klebelasche (60) vorhanden ist, welche im Bereich der Fase (36, 38) mit einer Innenseite (50) der Saugseitenschale (24) oder einer Innenseite (54) der Druckseitenschale (26) verbunden ist.

5. Rotorblatt (8) nach Anspruch 4, **dadurch gekennzeichnet, dass** die Saugseitenschale (24) und die Druckseitenschale (26) mit einer Fase (36, 38) versehen sind, wobei die Klebelasche (60) mit der Saugseitenschale (24) oder der Druckseitenschale (26) durch Anwendung eines Harzinfusionsverfahrens verbunden ist und wobei zwischen der Fase (36, 38) der anderen Rotorblattschale (24, 26) und der Klebelasche (60) ein, insbesondere mit einem Klebstoff gefüllter, Klebespalt (62) vorhanden ist.

6. Rotorblatt (8) nach Anspruch 1, **dadurch gekennzeichnet, dass** die Saugseitenschale (24) und/oder die Druckseitenschale (26) eine außenliegende Fase (36, 38) aufweisen, wobei, betrachtet in einer Querschnittsebene senkrecht zu einer Längsrichtung (L) des Rotorblatts (8), die Fase (36, 38) lediglich in einem Teilbereich des Querschnitts der Rotorblattschale (24, 26) verläuft.

7. Rotorblatt (8) nach Anspruch 6, **dadurch gekennzeichnet, dass** in einem verbleibenden weiteren Teilbereich des Querschnitts der Rotorblattschale (24, 26), in welchem die Fase (36, 38) nicht vorhanden ist, durchgängige Faserlagen (28) vorhanden sind, welche die Fase (36, 38) überragen und eine Klebelasche (60) ausbilden.

8. Rotorblatt (8) nach Anspruch 7, **dadurch gekennzeichnet, dass** die Fase (38), betrachtet in einer Querschnittsebene senkrecht zu einer Längsrichtung (L) des Rotorblatts (8), eine konvexe Form hat.

9. Verfahren zum Herstellen eines Rotorblatts (8) für eine Windkraftanlage (2), wobei das Rotorblatt (8) eine Saugseitenschale (24) und eine Druckseitenschale (26) umfasst, die aus einem Faserverbundwerkstoff hergestellt sind, wobei ein vorderer Rand (32) der Saugseitenschale (24) und ein vorderer Rand (34) der Druckseitenschale (26) an einer Profilvorderseite (20) des Rotorblatts (8) miteinander verbunden sind, **dadurch gekennzeichnet, dass** bei dem Verfahren der vordere Rand (32) der Saugseitenschale (24) und/oder der vordere Rand (34) der Druckseitenschale (26) zumindest abschnittsweise, insbesondere einseitig, mit einer Fase (36, 38) versehen werden, wobei der Faserverbundwerkstoff aus übereinandergeschichteten Fasergelegen oder Fasermatten hergestellt ist, welche, betrachtet in einer Querschnittsebene senkrecht zu einer Längsrichtung (L) des Rotorblatts (8), eine Anzahl übereinanderliegender Faserlagen (28) bilden, wobei während der Herstellung der Saugseitenschale (24) und/oder der Druckseitenschale (26) die Faserlagen (28) derart in eine Form (66, 68) eingelegt werden, dass eine Anzahl der übereinanderliegenden Faserlagen (28) in Richtung des vorderen Randes (32, 34) der Saugseitenschale (24) und/oder der Druckseitenschale (26) geringer wird, so dass eine Wandstärke (44, 46) der Saugseitenschale (24) und/oder der Druckseitenschale (26) in Richtung des vorderen Randes (32, 34) geringer wird.

10. Verfahren nach Anspruch 9, **dadurch gekennzeichnet, dass** die Faserlagen (28) derart in eine Form (66, 68) eingelegt werden, dass die Saugseitenschale (24) und/oder die Druckseitenschale (26) eine innenliegende Fase (36, 38) aufweisen.

11. Verfahren nach Anspruch 10, **dadurch gekennzeichnet, dass** eine Klebelasche (60) im Bereich der Fase (36, 38) mit einer Innenseite (50) der Saugseitenschale (24) oder einer Innenseite (54) der Druckseitenschale (26) verbunden wird, wobei insbesondere die Saugseitenschale (24) und die Druckseitenschale (26) mit einer Fase (36, 38) versehen werden und die Klebelasche (60) mit der Saugseitenschale (24) oder der Druckseitenschale (26) durch Anwendung eines Harzinfusionsverfahrens verbunden wird, und wobei ferner insbesondere zwischen der Fase (36, 38) der anderen Rotorblattschale (24, 26) und der Klebelasche (60) ein Klebespalt (62) vorhanden ist, welcher mit einem Klebstoff gefüllt wird.

12. Verfahren nach Anspruch 9, **dadurch gekennzeichnet, dass** der Faserverbundwerkstoff aus übereinandergeschichteten Fasergelegen oder Fasermatten hergestellt ist, welche, betrachtet in einer Querschnittsebene senkrecht zu einer Längsrichtung (L) des Rotorblatts (8), eine Anzahl übereinanderliegender Faserlagen (28) bilden, wobei während der Herstellung der Saugseitenschale (24) und/oder der Druckseitenschale (26) die Faserlagen (28) derart in eine Form (66) eingelegt werden, dass die Saugseitenschale (24) und/oder die Druckseitenschale (26) eine außenliegende Fase (36, 38) aufweisen, wobei, betrachtet in der Querschnittsebene, die Fase (36, 38) lediglich in einem Teilbereich des Querschnitts der Rotorblattschale (24, 26) verläuft.

13. Verfahren nach Anspruch 12, **dadurch gekennzeichnet, dass** an der Form (66, 68) zum Herstellen der Saugseitenschale (24) und/oder der Druckseitenschale (26) eine bogenförmige Nasenklebewinkelform (64) vorgesehen wird, wobei die Faserlagen (28) derart in die Form (66, 68) und an die Nasenklebewinkelform (64) angelegt werden, so dass die außenliegende Fase (36, 38) gebildet wird und in einem verbleibenden weiteren Teilbereich des Querschnitts der Rotorblattschale (24, 26), in welchem die Fase (36, 38) nicht vorhanden ist, durchgängige Faserlagen (28) vorhanden sind, welche die Fase (36, 38) überragen und eine Klebelasche (60) ausbilden und die Fase (36, 38), betrachtet in der Querschnittsebene, eine konvexe Form hat.

## Claims

1. A rotor blade (8) for a wind turbine (2) comprising a suction-side shell (24) and a pressure-side shell (26) that are produced from a fiber composite, wherein a front edge (32) of the suction-side shell (24) and a front edge (34) of the pressure-side shell (26) are connected to each other at a profiled front side (20) of the rotor blade (8), **characterized in that** the front edge (32) of the suction-side shell (24), and/or the front edge (34) of the pressure-side shell (26) are provided with a chamfer (36, 38), at least sectionally, in particular on one side, wherein the fiber composite is produced from layered fiber fabrics or fiber mats that, viewed in a cross sectional plane perpendicular to a longitudinal direction (L) of the rotor blade (8), form a number of stacked fiber layers (28), wherein in an end region (40, 42) established by the chamfer (36, 38), a wall thickness (44, 46) of the suction-side shell (24), and/or the pressure-side shell (26), is less in the direction of the front edge (32, 34), and a number of the stacked fiber layers (28) decreases in this direction.

2. The rotor blade (8) according to claim 1, **characterized in that** the suction-side shell (24) and/or the pressure-side shell (26) have an inner chamfer (36, 38).

3. The rotor blade (8) according to claim 2, **characterized in that** the chamfer (36, 38) extends over an entire wall thickness (44, 46) of the suction-side shell (24), and/or the pressure-side shell (26), from an outer side (48, 52) up to an inner side (50, 54) of the suction-side shell (24), and/or the pressure-side shell (26).

4. The rotor blade (8) according to claim 2 or 3, **characterized in that** there is an adhesive tab (60) that is connected in the region of the chamfer (36, 38) to an inner side (50) of the suction-side shell (24) or an inner side (54) of the pressure-side shell (26).

5. The rotor blade (8) according to claim 4, **characterized in that** the suction-side shell (24) and the pressure-side shell (26) are connected to a chamfer (36, 38), wherein the adhesive tab (60) is connected to the suction-side shell (24) or the pressure-side shell (26) by using a resin injection method, and wherein there is an adhesive gap (62), in particular filled with an adhesive, between the chamfer (36, 38) of the other rotor blade shell (24, 26) and the adhesive tab (60).

6. The rotor blade (8) according to claim 1, **characterized in that** the suction-side shell (24) and/or the pressure-side shell (26) have an exterior chamfer (36, 38) wherein, viewed in a cross-sectional plane perpendicular to a longitudinal direction (L) of the rotor blade (8), the chamfer (36, 38) only runs in a portion of the cross-section of the rotor blade shell (24, 26).

7. The rotor blade (8) according to claim 6, **characterized in that**, in a remaining additional portion of the cross-section of the rotor blade shell (24, 26) in which the chamfer (36, 38) does not exist, there are continuous fiber layers (28) that extend beyond the chamfer (36, 38) and form an adhesive tab (60).

8. The rotor blade (8) according to claim 7, **characterized in that** the chamfer (38), viewed in a cross-sectional plane perpendicular to a longitudinal direction (L) of the rotor blade (8), has a convex shape.

9. A method to produce a rotor blade (8) for a wind turbine (2) wherein the rotor blade comprises a suction-side shell (24) and a pressure-side shell (26) that are produced from a fiber composite, wherein a front edge (32) of the suction-side shell (24) and a front edge (34) of the pressure-side shell (26) are connected to each other at a profile front side (20) of the rotor blade (8), **characterized in that** in the method, the front edge (32) of the suction-side shell (24), and/or the front edge (34) of the pressure-side shell (26) are provided with a chamfer (36, 38), at least sectionally, in particular on one side, wherein the fiber composite is produced from layered fiber fabrics or fiber mats that, viewed in a cross sectional plane perpendicular to a longitudinal direction (L) of the rotor blade (8), form a number of stacked fiber layers (28), wherein during the production of the suction-side shell (24) and/or the pressure-side shell (26), the fiber layers (28) are placed in a mold (66, 68) such that a number of the stacked fiber layers (28) in the direction of the front edge (32, 34) of the suction-side shell (24) and/or the pressure-side shell (26) is less so that a wall thickness (44, 46) of the suction-side shell (24), and/or the pressure-side shell (26), is less in the direction of the front edge (32, 34).

10. The method according to claim 9, **characterized in that** the fiber layers (28) are placed in a mold (66, 68) such that the suction-side shell (24) and/or the pressure-side shell (26) have an inner chamfer (36, 38).

11. The method according to claim 10, **characterized in that** an adhesive tab (60) in the region of the chamfer (36, 38) is connected to an inner side (50) of the suction-side shell (24), or an inner side (54) of the pressure-side shell (26), wherein in particular the suction-side shell (24) and the pressure-side shell (26) are provided with the chamfer (36, 38), and the adhesive tab (60) is connected to the suction-side shell (24) or the pressure-side shell (26) by using a resin infusion method, and wherein moreover there is an adhesive gap (62) in particular between the chamfer (36), 38) of the other rotor blade shell (24, 26) and the adhesive tab (60) that is filled with an adhesive.

12. The method according to claim 9, **characterized in that** the the fiber composite is produced from layered fiber fabrics or fiber mats that, viewed in a cross-sectional plane perpendicular to a longitudinal direction (L) of the rotor blade (8), form a number of stacked fiber layers (28), wherein during the production of the suction-side shell (24) and/or the pressure-side shell (26), the fiber layers (28) are placed in a mold (66) such that the suction-side shell (24) and/or the pressure-side shell (26) have an exterior chamfer (36, 38) wherein, viewed in the cross-sectional plane, the chamfer (36, 38) only runs in a portion of the cross-section of the rotor blade shell (24, 26).

13. The method according to claim 12, **characterized in that** an arc-shaped tip adhesion angle mold (64) is provided on the mold (66, 68) to produce the suction-side shell (24) and/or the pressure-side shell (26), wherein the fiber layers (28) are placed in the mold (66, 68) and on the tip adhesion angle mold (64) such that the exterior chamfer (36, 38) is formed, and continuous fiber layers (28) are in a remaining, additional portion of the cross-section of the rotor blade (24, 26) in which the chamfer (36, 38) does not exist, and protude beyond the chamfer (36, 38) and form and adhesive tab (60), and the chamfer (36, 38) has a convex shape viewed in the cross-sectional plane.

## Revendications

1. Pale de rotor (8) pour une éolienne (2), comportant une coque d'extrados (24) et une coque d'intrados (26) qui sont fabriquées à partir d'un matériau composite à base de fibres, dans laquelle un bord avant (32) de la coque d'extrados (24) et un bord avant (34) de la coque d'intrados (26) sont assemblés l'un à l'autre sur une face avant de profil (20) de la pale de rotor (8), **caractérisée en ce que** le bord avant (32) de la coque d'extrados (24) et/ou le bord avant (34) de la coque d'intrados (26) sont pourvus, au moins dans certaines parties, en particulier d'un seul côté, d'un biseau (36, 38), dans laquelle le matériau composite à base de fibres est fabriqué à partir de non-tissés de fibres ou de mats de fibres disposés en couche les uns au-dessus des autres qui, considérés dans un plan de coupe transversale perpendiculaire à une direction longitudinale (L) de la pale de rotor (8), forment une pluralité de couches de fibres superposées (28), une épaisseur de paroi (44, 46) de la coque d'extrados (24) et/ou de la coque d'intrados (26), dans une zone d'extrémité (40, 42) définie par le biseau (36, 38), étant plus petite en direction du bord avant (32, 34) et une pluralité des couches de fibres superposées (28) diminue dans cette direction.

2. Pale de rotor (8) selon la revendication 1, **caractérisée en ce que** la coque d'extrados (24) et/ou la coque d'intrados (26) comportent un biseau interne (36, 38).

3. Pale de rotor (8) selon la revendication 2, **caractérisée en ce que** le biseau (36, 38) s'étend sur une épaisseur de paroi complète (44, 46) de la coque d'extrados (24) et/ou de la coque d'intrados (26) depuis un côté extérieur (48, 52) jusqu'à un côté intérieur (50, 54) de la coque d'extrados (24) et/ou de la coque d'intrados (26).

4. Pale de rotor (8) selon la revendication 2 ou la revendication 3, **caractérisée en ce qu'**une languette de collage (60) est présente, laquelle languette de collage est assemblée dans la zone de du biseau (36, 38) à un côté intérieur (50) de la coque d'extrados (24) ou à un côté intérieur (54) de la coque d'intrados (26).

5. Pale de rotor (8) selon la revendication 4, **caractérisée en ce que** la coque d'extrados (24) et la coque d'intrados (26) sont pourvues d'un biseau (36, 38), dans laquelle la languette de collage (60) est assemblée à la coque d'extrados (24) ou à la coque d'intrados (26) en appliquant un procédé d'infusion de résine, et dans laquelle, entre le biseau (36, 38) de l'autre coque de pale de rotor (24, 26) et la languette de collage (60), il existe un interstice de collage (62) en particulier rempli d'une colle.

6. Pale de rotor (8) selon la revendication 1, **caractérisée en ce que** la coque d'extrados (24) et/ou la coque d'intrados (26) comporte un biseau externe (36, 38), dans laquelle, considéré dans un plan de coupe transversale perpendiculaire à une direction longitudinale (L) de la pale de rotor (8), le biseau (36, 38) s'étend uniquement dans une zone partielle de la section transversale de la coque de pale de rotor (24, 26).

7. Pale de rotor (8) selon la revendication 6, **caractérisée en ce que** dans une autre zone partielle restante de la section transversale de la coque de pale de rotor (24, 26), dans laquelle le biseau (36, 38) n'est pas présent, il y a des couches de fibres continues (28) qui dépassent du biseau (36, 38) et forment une languette de collage (60).

8. Pale de rotor (8) selon la revendication 7, **caractérisée en ce que** le biseau (38), considéré dans un plan de coupe transversale perpendiculaire à une direction longitudinale (L) de la pale de rotor (8), a une forme convexe.

9. Procédé pour fabriquer une pale de rotor (8) pour une éolienne (2), dans lequel la pale de rotor (8) comporte une coque d'extrados (24) et une coque d'intrados (26) qui sont fabriquées à partir d'un matériau composite à base de fibres, dans lequel un bord avant (32) de la coque d'extrados (24) et un bord avant (34) de la coque d'intrados (26) sont assemblés l'un à l'autre sur une face avant de profil (20) de la pale de rotor (8), **caractérisé en ce que**, pendant le procédé, le bord avant (32) de la coque d'extrados (24) et/ou le bord avant (34) de la coque d'intrados (26) sont pourvus, au moins dans certaines parties, en particulier d'un seul côté, d'un biseau (36, 38), dans lequel le matériau composite à base de fibres est fabriqué à partir de non-tissés de fibres ou de mats de fibres disposés en couches les uns au-dessus des autres qui, considérés dans un plan de coupe transversale perpendiculaire à une direction longitudinale (L) de la pale de rotor (8), forment une pluralité de couches de fibres superposées (28), les couches de fibres (28) étant, pendant la fabrication de la coque d'extrados (24) et/ou de la coque d'intrados (26), placées dans un moule (66, 68) de telle sorte qu'une pluralité de couches de fibres superposées (28) est réduite en direction du bord avant (32, 34) de la coque d'extrados (24) et/ou de la coque d'intrados (26), de sorte qu'une épaisseur de paroi (44, 46) de la coque d'extrados (24) et/ou de la coque d'intrados (26) diminue en direction du bord avant (32, 34).

10. Procédé selon la revendication 9, **caractérisé en ce que** les couches de fibres (28) sont placées dans un moule (66, 68) de telle sorte que la coque d'intrados (24) et/ou la coque d'extrados (26) comportent un biseau interne (36, 38).

11. Procédé selon la revendication 10, **caractérisé en ce qu'**une languette de collage (60) est assemblée dans la zone du biseau (36, 38) à un côté intérieur (50) de la coque d'extrados (24) ou à un côté intérieur (54) de la coque d'intrados (26), dans lequel, en particulier, la coque d'extrados (24) et la coque d'intrados (26) sont pourvues d'un biseau (36, 38) et la languette de collage (60) est assemblée à la coque d'extrados (24) ou à la coque d'intrados (26) en appliquant un procédé d'infusion de résine, et dans lequel un interstice de collage (62) est également présent en particulier entre le biseau (36, 38) de l'autre coque de pale de rotor (24, 26) et la languette de collage (60), lequel interstice de collage est rempli d'une colle.

12. Procédé selon la revendication 9, **caractérisé en ce que** le matériau composite à base de fibres est fabriqué à partir de non-tissés de fibres ou de mats de fibres disposés en couches les uns au-dessus des autres qui, considérés dans un plan de coupe transversale perpendiculaire à une direction longitudinale (L) de la pale de rotor (8), forment une pluralité de couches de fibres (28) superposées, les couches de fibres (28) étant, pendant la fabrication de la coque d'extrados (24) et/ou de la coque d'intrados (26), placées dans un moule (66) de telle sorte que la coque d'extrados (24) et/ou la coque d'intrados (26) comportent un biseau externe (36, 38), le biseau (36, 38), considéré dans le plan de coupe transversale, s'étendant uniquement dans une zone partielle de la section transversale de la coque de pale de rotor (24, 26).

13. Procédé selon la revendication 12, **caractérisé en ce que**, sur le moule (66, 68) destiné à fabriquer la coque d'extrados (24) et/ou la coque d'intrados (26), un moule angulaire de collage de nez (64) est prévu, les couches de fibres (28) étant placées dans le moule (66, 68) et sur le moule angulaire de collage de nez (64) de telle sorte que le biseau externe (36, 38) soit formé et que, dans une autre zone partielle restante de la section transversale de la coque de pale de rotor (24, 26), dans laquelle le biseau (36, 38) n'est pas présent, il y ait des couches de fibres continues (28) qui dépassent du biseau (36, 38) et forment une languette de collage (60), et le biseau (36, 38), considéré dans le plan de coupe transversale, a une forme convexe.
